# EUROPEAN PATENT SPECIFICATION

(11) **EP 4 397 420 B1**
(45) Date of publication and mention of the grant of the patent: **01.10.2025**
(21) Application number: 23218048.9
(22) Date of filing: 19.12.2023
(51) Int. Cl.: B08B 9/049, B08B 9/051, B25J 5/00, F16L 55/28, F16L 55/32, F16L 55/44, G01M 3/00, F16L 101/12, F16L 101/16, F16L 101/30

(54) **A MODULAR ROBOT FOR MAINTENANCE OF CONDUITS**
MODULARER ROBOTER ZUR WARTUNG VON LEITUNGEN
ROBOT MODULAIRE POUR L'ENTRETIEN DE CONDUITES

(30) Priority: 04.01.2023 FI 20235011
(43) Date of publication of application: 10.07.2024
(73) Proprietor: Crawler Oy, 45130 Kouvola (FI)
(72) Inventor: LAURILA, Jari, 45720 Kuusankoski (FI); SORATIE, Lauri, 02180 Espoo (FI)
(74) Representative: Boco IP Oy Ab

(56) References cited:
- CN-A- 111 085 513
- US-A- 5 377 381
- US-A- 5 528 789
- US-A1- 2021 025 535

## Description

### Field

The present invention relates to an apparatus related to performing maintenance operations on inner walls of conduits. More particularly, the present invention relates to an agile, modular robot for semi-automatic maintenance of inner walls of conduits.

### Background

Ventilating, air-conditioning, and exhausting conduits suffer by deposition of dirt on the inner walls, which could have negative fire (e.g. flammable deposits), health (e.g. legionella type bacteria), or functional (narrowing cross section) impacts on its use. Presence of deposits above certain level is solved either by replacement of the conduit, or by cleaning of its inner surface.

Several solutions for cleaning of conduits exist, such as brushing of inner surface. Another known cleaning method is blasting of the inner surface, which can be implemented for example by clean air blasting, water blasting, sand blasting, soda blasting or dry ice blasting. Blasting refers to blast particles or pellets at high speeds. Dry ice is also known as carbon dioxide snow, i.e. granular solid carbon dioxide. Dry ice blasting blasts solid carbon dioxide (CO₂) pellets or particles at supersonic speeds. The pellets or particles sublimate on impact, which causes lifting dirt and contaminants off the underlying substrate.

Dry ice blasting is capable of removing solidified, adherent and baked dirt. Dry ice blasting allows to erode dirt deposits like solidified grease, baked oils, asphalt and rubber without any damage to the conduit and without introduction of additional blasting means, such as sand, water or similar, which could harm the conduit. It is also useful for cleaning dirt, dust, liquid, gas and aerosols comprising flammable or explosive substances.

Conduits may have circular, elliptical and/or rectangular cross sections. Also transitions between circular, elliptical, and rectangular cross sections may appear. Typically, diameter of a conduit is approximately constant, but the radius of bends may be small compared to the diameter; a bend radius is equal to the conduit diameter but conduits with bent radius close to the half of conduit diameter are common. Some types of conduits feature frequent bends and branching. The robot shall be able to travel through bends with small radii and pass branching. The robot should be able to travel horizontally, in sloped conduits as well as vertically both up and down.

A robot performing any type of blasting should be able to drag a hose transporting any type of blowing particles and pressurized air or sucked dirt as well as possible cabling, such as an Ethernet cable, for providing a control signal connection and a power cable, when needed. A hose capable of transporting such substances has relatively high rigidity and large specific weight per length unit. Diameter of the hose transporting dry ice is typically 20 mm or 35 mm, while the pressure of medium is 0.6-1.5 MPa (6-15 bars). A typical dry ice hose has a diameter of 32 mm. Ethernet and power cables add to the total weight of load to be carried by the robot. Another requirement for the robot is to keep the rotating or pivoting, spraying nozzle, which applies the cleaning medium, centralized in the conduit axis.

Instead of or in addition to cleaning, some conduits may require other types of maintenance operations, such as coating or grinding of inner walls of the conduit. Also, various substances may be applied on the inner walls of the conduit, such as coating materials, paints, cleaning substances or chemicals. Grinding can be performed for example using grinding sand, soda ash or glass that has been collected on the walls when in use.

To avoid requirement for having multiple robots for different tasks, a robot is needed that can be adjusted for various operations. Functional requirements of the robot are preferably set by the most stringent operation types.

### Description of the related art

EP1054752 discloses a method of cleaning inside surface of ducts by using solid carbon dioxide blasting. Solid carbon dioxide is supplied via a nozzle on a trolley moving along inside of the duct.

EP2456578 discloses a robot for cleaning and inspection of conduits. The robot carries a nozzle for cleaning medium, and a video camera. Minimum three driving units with tracks or wheels are radial-symmetrically attached to a body.

US2021025535 A1 discloses a modular robot for inspecting and maintenance of conduits according to the preamble of independent claim 1.

### Summary

An object is to provide an apparatus with improved characteristics for performing various maintenance operations on inner walls of conduits. The objects of the present invention are achieved with an apparatus according to the claim 1. The objects of the present invention are further achieved with a conduit maintenance system according to the claim 16. The preferred embodiments of the invention are disclosed in the dependent claims.

The present invention is based on the idea of providing an agile modular robot that is capable of blasting various substances on walls of the conduit, sucking various substances from the conduit and/or brushing inner walls of the conduit. The same modular robot can also be used for supervising condition of conduits by means of at least one camera and/or a video camera.

The present invention has the advantage that it facilitates quick and effective maintenance of conduits. In particular, the functionalities of the apparatus enable highly effective means for cleaning of conduits, such as dry ice cleaning of conduits using dry ice blasting.

According to a first aspect, a modular robot for inspecting and maintenance of conduits is provided. The modular robot comprises a control module configured to operate outside a conduit. The control module is configured to control operation of a plurality of in-conduit modules configured to travel, during operation, within the conduit. The control module is optionally configured to feed operating power to the plurality of in-conduit modules. In-conduit modules comprise a nozzle module configured to rotate a nozzle and/or a brush within the conduit, at least one drive module configured to cause movement of in-conduit modules within the conduit, and optionally a power module configured to feed operating power to the nozzle module and the at least one drive module. The power module is configured to be in data communication with the control module and to produce control signals for the nozzle module and the at least one drive module on basis of said data communication. Said in-conduit modules are coupled to a flexible hose with non-zero distances from each other, wherein the flexible hose is further configured for feeding at least one substance to and/or from the nozzle module.

According to some aspects, the nozzle module comprises a guiding member protruding at the distal end of the nozzle module along the longitudinal central axis of a body of the nozzle module.

According to some aspects, the guiding member is connected directly or indirectly to the body of the nozzle module by a flexible member, such as a spring.

According to some aspects, the nozzle module further comprises a camera and a lighting device, and wherein the camera is provided with a data communication connection with the power module.

According to some aspects, the at least one drive module comprises a hinge and a latch mechanism for enabling assembly of the at least one drive module on the hose.

According to some aspects, the power module is an in-conduit module and comprises a hinge and a latch mechanism for enabling assembly of the power module on the hose.

According to some aspects, the control module comprises a user interface and/or the control module is in data communication connection with a mobile computing device providing a user interface for controlling operation of the modular robot.

According to some aspects, the nozzle module comprises a rotating motor and a motor controller, wherein the rotating motor is configured to rotate the nozzle and/or the brush based on a control signal received from the power module or from the control module.

According to some aspects, rotation speed of the nozzle and/or the brush is adjustable within a range from 5 to 100 rotations per minute.

According to some aspects, the nozzle module comprises at least three roller units extending outwardly from a body of the nozzle module.

According to some aspect, extension of roller units from the body of the nozzle module is autonomously adjusted within a first range of extension by spring elements between roller units and the body of the nozzle module.

According to some aspects, extension of roller units from the body of the nozzle module is autonomously adjusted within a first range of extension by spring elements between roller units and the body of the nozzle module.

According to some aspects, the nozzle module comprises at least one crawler unit or driving wheel unit, wherein each crawler unit or driving wheel unit comprises a crawler or a driving wheel, a motor and a motor controller.

According to some aspects, the at least one drive module comprises at least three crawler units extending outwardly from a body of the drive module, wherein each crawler unit comprises a crawler, a motor and a motor controller.

According to some aspects, extension of crawler units from the body of the drive module is autonomously adjusted within the first range of extension by spring elements between crawler units and the body of the drive module.

According to some aspects, a scissor-type extension legs are provided for each of the roller units and/or the crawler units. Extension of the scissor-type extension legs is configured to be controlled by electromechanical actuators on basis of control signals received from the power module or from the control module.

According to a second aspect of the invention, a conduit maintenance system comprising a modular robot according to any of the above aspects, and a feed apparatus coupled to the proximal end of the hose. The feed apparatus is in data communication connection with the control module and operation of the feed apparatus is configured to be controlled by the control module.

According to some aspects, the feed apparatus is a dry ice apparatus.

### Brief description of the drawings

In the following the invention will be described in greater detail, in connection with preferred embodiments, with reference to the attached drawings, in which
Figure 1 is a general view of a modular robot in a conduit.
Figures 2a and 2b illustrate a nozzle module.
Figures 3a and 3b illustrate a nozzle module.
Figures 4a and 4b illustrate a nozzle module with extension legs.
Figures 5a and 5b illustrate a nozzle module with extension legs.
Figures 6a and 6b illustrate a nozzle module with extension legs.
Figures 7a and 7b illustrate a drive module.
Figures 8a and 8b illustrate a drive module.
Figure 9 illustrates a drive module with extension legs.
Figure 10 illustrates elements of a conduit maintenance system operating with the modular robot.
Figure 11 illustrates the nozzle module.
Figure 12 illustrates the drive module.
Figures 13a and 13b illustrate the power module.
Figures 14a and 14b illustrate the control module.

### Detailed description

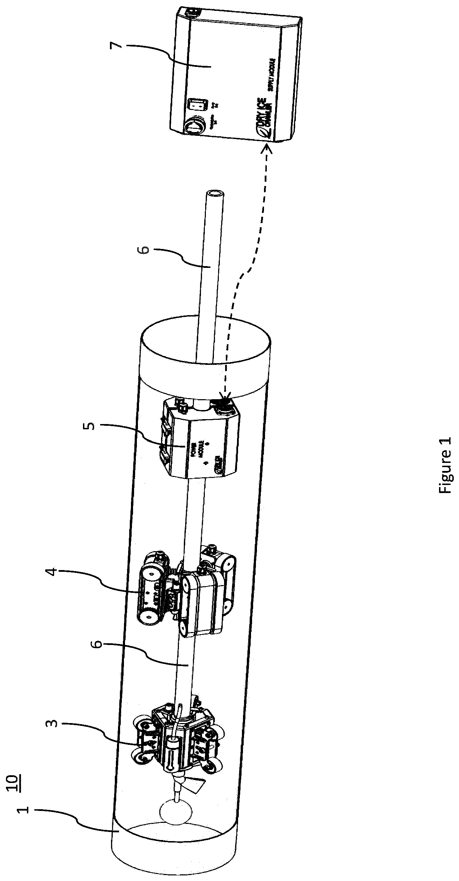

The figure 1 illustrates a general view of a modular robot 10 according to some embodiments, disposed within a conduit 1. Although a conduit 1 with circular cross-section is shown in the following examples, it is to be understood that the conduit may have various shapes, such as square, rectangular, multidimensional and so on. The conduit may have bends, corners and branching.

The modular robot 10 according to this embodiment comprises four basic modules: a nozzle module 3, at least one drive module 4, a power module 5 and a control module 7. The nozzle module 3, the at least one drive module 4, and the power module 5 are configured to operate within the conduit 1 and may be referred together as in-conduit modules. The control module 7 is configured to operate outside the conduit 1. The in-conduit modules 3, 4, 5 are mechanically coupled to each other via a hose 6, which is made of flexible material, such as a reinforced PVC hose or a reinforced rubber hose. Preferably, the hose 6 forms the effective mechanical coupling between the in-conduit modules 3, 4, 5, while control and power connections, even when wireline, have little or no significance for mechanical coupling between in-conduit modules, but only provide electrical and/or communication connections. The same basic invention may be applied to various uses by selecting a hose 6 specifically designed for wanted maintenance operation. Applicable hoses can be selected among a variety of commercially available hose types. Required flexibility of the hose 6 depends on application. A non-limiting exemplary hose commonly used for dry ice blasting is discussed above.

There is a non-zero distance between in-conduit modules 3, 4, 5 and thus the hose 6 enables the modular robot to bend between relatively small in-conduit modules 3, 4, 5 such that the modular robot 10 can pass bends and branches within the conduit. Although a single drive module 4 is shown, more than one drive modules 4 may be used to increase drive force with heavier loads. Load may be increased for example, if the conduit is very long in which case the hose 6 also needs to be long and therefore both the hose and contents thereof becomes heavy. The mobile robot 10 may carry a hose 6 up to at least 50 meters long. The nozzle module 3 is attached to the distal end of the hose 6, coupling the hose 6 to a nozzle. Length of the hose 6 sets an upper limit to length of a conduit 1 the modular robot 10 can handle. Proximal end of the hose 6 may be coupled to an apparatus and/or reservoir for feeding a substance or substances to and/or from the nozzle through the hose 6.

As known in the art, pressure inside the hose 6 affects its flexibility. When the robot is used for blasting, the hose 6 is pressurized and feeds one or more substances for blasting to the nozzle of the nozzle module 3 from a reservoir (not shown). Required and available flexibility of the hose 6 is a function of pressure within the hose 6 used for feeding the one or more substances. When the robot is used for suction, flexibility of the hose 6 is selected based on characteristics of the suction operation. For example, a reinforced synthetic low temperature rubber hose for dry ice blasting may be designed for pressures between 7 and 15 bars, and a reinforced low temperature PVC hose for dry ice blasting may be designed for pressures up to 20 bars or more. Naturally, hoses designed for other types of blasting may be designed for different pressure ranges. Flexibility of the hose 6 should be such that it does not unnecessarily fold or collapse between modules but is flexible enough to allow the robot to move along the conduit.

In comparison to known crawler robots known in the art, which comprise an integrated crawler apparatus, the modular robot's functions have been divided into its modules, and flexibility provided by the hose 6 makes the modular robot agile. Thus, the modular robot 10 fits into narrow conduits and can pass corners in the conduit. The exemplary modular robot 10 illustrated herein is designed to operate in conduits with diameter from 200 mm to 600 mm.

In addition to the hose 6, modules are coupled to provide operating power and control. Electrical power may be provided to the in-conduit modules 3, 4, 5 by means of a power cable and/or by one or more batteries comprised in the power module 5. A mains power cable may be attached to the hose 6, carrying mains power to the power module, which comprises a power supply for generating suitable DC power source for all electronics and electro-mechanical actuators in the in-conduit modules 3, 4, 5. A long power cable attached to the hose can be omitted by providing at least one battery at the power module 5. Battery-based solution limits amount of available power and thus operating time of the modular robot, since size and weight of batteries must be suitable for being carried along the power module 5 within the conduit.

Appropriate communication interfaces are provided in each of the modules. Operation of all modules is controlled by means of the control module 7, which further provides or is connected to a device providing a user interface (not shown). A full user interface may be provided at the control module 7, or the control module may comprise a limited user interface, while a user interface with further functionalities is provided by a mobile computing device, such as a mobile phone or a tablet computer, which communicates with the control module 7.

Communication between the control module 7, power module 5, one or more drive modules 4 and nozzle module 3 may be implemented by wireless or wired communication. Wireless communication is feasible for shorter operation distances, while wired communication is preferred for longer operation distances, since long conduits, in particular metal conduits, are known to cause challenges to wireless communication. Wireless communication is preferred between the control module 7 and the optional mobile computing device.

Control signals from the control module 7 to the power module 5 may be provided over wireless or wired control signal connections. According to some embodiments, control signal connection between the control module 7 and the power module is provided by an Ethernet connection, in which case an Ethernet cable is preferably attached to the hose 6 at least for the portion of the hose 6 between the control module 7 and the power module 5 that is intended to travel inside the conduit 1 during operation. Alternatively, a Wi-Fi connection may be provided between the control module 7 and the power module 5.

Control signals from the power module 5 to the drive 4 and nozzle module 3 are used for controlling operation of motors and/or actuators in the drive module 4 and the nozzle module 3.

The drive module 4 comprises drive motors for operating crawler units that enable a crawling motion of the drive module that moves in-conduit modules in unison forwards and backwards within the conduit. Control signals from the power module 5 control operation of the drive motors. According to some embodiments each crawler unit is provided with its own drive motor that is controlled by a stepper motor controller that is in turn controlled by control signals received from the power module 5.

The nozzle module 3 comprises at least one rotation motor configured to rotate the nozzle and/or a brush. A rotation motor controller, such as a stepper motor controller may be provided at the nozzle module 3 to control operation of the rotation motor. Control signal(s) for controlling the at least one rotation motor is/are preferably received from the power module 5 over a control signal connection. When communication is wireline, it is preferred that control signal(s) for the nozzle module motor(s) are provided via the drive module 4. Wires needed for communication may be attached to the hose 6 between modules.

According to some embodiments, operating power for the nozzle module 3 and the drive module 4 is provided from the control module 7, in which case no separate in-conduit power module is needed and data communication from the control module 7 comprises control signals for controlling operation of the in-conduit modules.

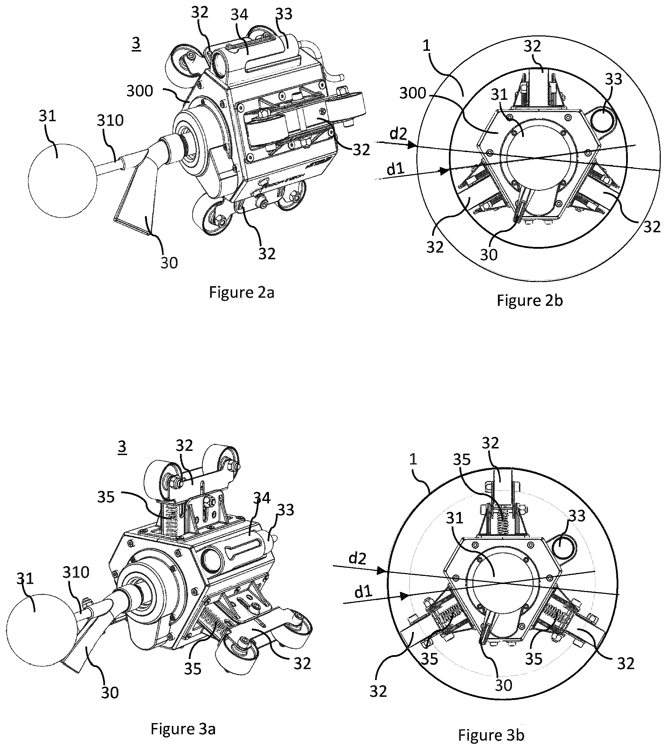

Figures 2a to 6b illustrate the nozzle module 3. The nozzle 30 is preferably on the distal side of the body 300 of the nozzle module 3. The hose 6 is coupled to the nozzle 30 for feeding substances from and to the nozzle 30. The nozzle module 3 comprises at least one rotation motor configured to produce a rotating motion with adjustable rotation speed. The at least one rotation motor is preferably inside the body 300 of the nozzle module 3. Rotation speed is preferably adjustable within a range from 5 to 100 rotations per minute. Rotating motion may be used for rotating the nozzle 30 that is configured for blasting and/or spraying any substance, such as a cleaning substance, a coating substance or a grinding substance or the nozzle 30 that is configured for removing loose particles or liquid from the conduit. Cleaning substances may comprise water, various solvents, or dry ice. Coating substances may comprise any type of coating materials, such as paints and chemicals. Grinding substances may comprise for example sand, glass, sodium bicarbonate.

Rotating motion provided by a rotating motor of the nozzle module may also be used for rotating a brush made of any applicable material for mechanically brushing the conduit. For rotating the nozzle and the brush with mutually different rotation speeds, more than one rotating motors may be provided in the nozzle module, or a gearing arrangement may be provided that causes mutually different rotating speeds of the brush and the nozzle. The brush may be manufactured form different materials to enable using it for brushing or grinding purposes. The nozzle module 3 may be provided with a combination of a brush (not shown) and the nozzle 30 to enable simultaneously blasting or spraying the walls and enhancing cleaning function by the brushing operation. The nozzle module 3 may be provided with a combination of a brush (not shown) and the nozzle 30 can be provided to enable simultaneously brushing the conduit and removing particles detached by the brushing operation.

A guiding member 31 is preferably provided at the distal end of the nozzle module 30. The purpose of the guiding member 31 is to facilitate navigation within the conduit in particular in curved or bent sections thereof as well as in branches. In these examples, a ball-shaped guiding member 31 is disposed at the distal end of the nozzle module 3. Preferably, the guiding member 31 protrudes at the distal end of the nozzle module along a longitudinal central axis of the body of the nozzle module 3 when not affected by external force. The guiding member 31 is preferably directly or indirectly coupled to the body 300 by a flexible member 310, such as a spring, to enable the guiding member to steer the nozzle module 3 and thus the entire modular robot in bends of the conduit. The flexible member 310 may be a passive element or it may be an active element that can be controlled for steering purposes, to steer the guiding member 31 and thus the entire mobile robot into a wanted direction for example at a branching of the conduit.

The nozzle module 3 comprises at least three roller units 32 extending radially from the body 300 of the nozzle module 3. In this example, each roller unit 32 is provided with two rollers or wheels, but more than two may be provided. Roller units 32 are preferably adjustable such that diameter of the nozzle module 3 can be adjusted to enable operation in conduits of different sizes as well as to adjust diameter of the nozzle module 3 when passing bent sections of the conduit, which may have slightly smaller diameter than a straight section of the same conduit.

According to some embodiments, the nozzle module 3 is provided with at least one crawler unit or driving wheel unit or equivalent. Each crawler unit or driving wheel unit comprises a motor configured to drive these, and a motor controller configured to control operation of the at least one motor, so that also the nozzle module 3 participates in driving operation of the module robot with the at least one drive module. One or more of roller units 32 may be replaced by crawler units or driving wheel units. Implementation of the at least one crawler unit or driving wheel unit may be similar to what will be discussed in connection with the drive module 4. Extension of the at least one crawler unit or driving wheel unit from the body 300 is preferably arranged similar to extension of roller units and/or crawler units of the drive module.

The nozzle module 3 shown in the figures 2a to 6b also comprises a camera unit 33 attached to a bracket 34 extending or attached to a body of the nozzle module 3. The camera unit 33 may comprise a camera or a combination of camera and light. The camera may be of any type, such as a still camera, a video camera or an infrared camera or a combination thereof. A video camera is preferred for visual inspection of conduits. The camera unit 33 is preferably removable attachable to the nozzle module 3 so that it can be removed when it is not needed. Omitting the camera unit 33 may be preferred in some operating conditions that are considered harmful for the camera unit 33.

For improving operation of the camera unit 33 within dark conduits, the camera unit 33 is preferably provided with or associated with a light source to improve visibility. A lighting apparatus may be included or associated with the camera unit 33 and/or a separate lighting apparatus may be attached to the nozzle module 3.

Diameter of the nozzle module 3 may be self-adjusting, based on spring elements 35 associated with the roller units 32. Spring elements 35 are configured to produce a suitable pressure against the inner walls of the conduit 1. Alternatively, extension of roller units 32 and thus diameter of the nozzle module 3 may be controlled by the control module 5 by means of one or more actuators, such as electromechanical actuators. The control module 5 is communicatively connected to the nozzle module 3 such that all operations of the nozzle module 3 can be controlled by means of control signals provided by the control module 5. Control of actuators may be implemented directly such that the control module 5 provides control signals to actuators provided in the nozzle module 3. Communication between the control module 5 and the nozzle module may be wireless or wireline.

Figure 2a is a perspective view of the nozzle module 3. Figure 2b illustrates a distal view of the corresponding nozzle module 3 in a conduit with diameter d1, in other as seen from the front of the nozzle module 3. A circular conduit 1 is approximated in the figure 2b. Figures 2a and 2b illustrate the minimum diameter state of the nozzle module 3, in which roller units 32 are as close to the body 300 as possible.

Figure 3a is a perspective view of the nozzle module 3. Figure 3b illustrates a distal view of the corresponding nozzle module 3 in a conduit with diameter d2, in other as seen from the front of the nozzle module 3, diameter d2 being greater than diameter d1. A circular conduit 1 is approximated in the figure 3b. Figures 3a and 3b illustrate an increased diameter state of the nozzle module 3, in which roller units 32 are pushed radially out from the body 300 by spring elements 35 provided for each roller unit 32. Adjusting the diameter of the nozzle module 3 between the minimum diameter state of figures 2a and 2b and increased diameter state of figures 3a and 3b can be autonomous such that it does not require any dedicated electromechanical or other controllable actuators, since spring elements 35 may be configured to automatically push roller units 32 outwards until they meet the inner surface of the conduit.

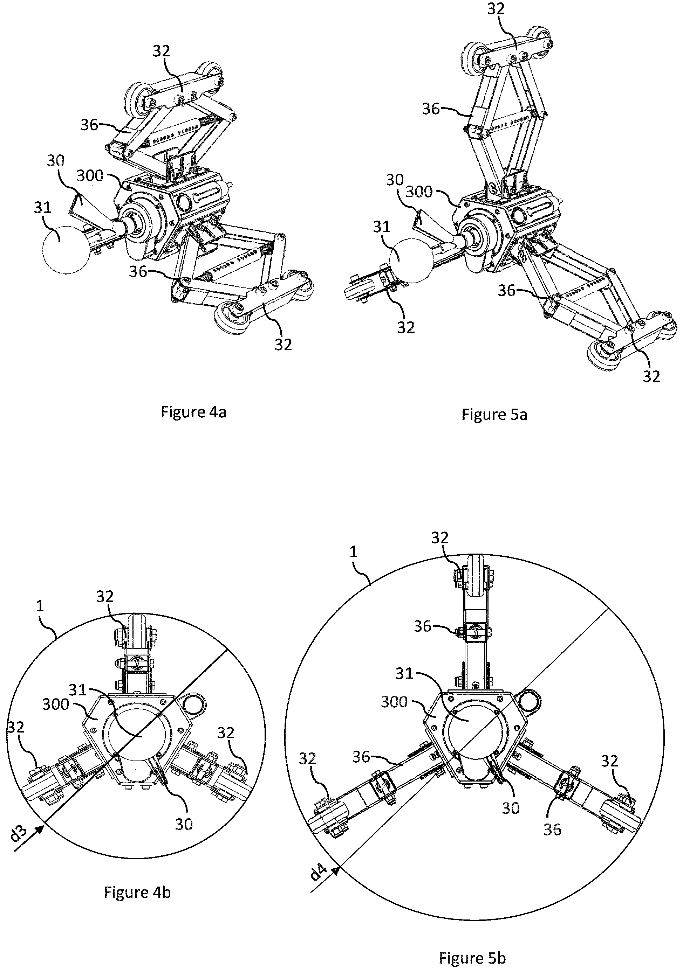

Figures 4a to 5b illustrate a nozzle module 3 in which roller units 32 are provided with scissor-type extension legs 36 that enable increasing the maximum diameter of the nozzle module 3 to operate in conduits with greater diameters. Figures 4a and 4b show extension legs 36 in a slightly extended diameter state in a conduit 1 with a diameter d3, which is greater than diameter d2, and figures 5a and 5b show extension legs 36 in a greatly extended state, when the nozzle module is in a conduit 1 with diameter d4, which is greater than d3. Extension of extension legs 36 is preferably implemented with one or more controllable actuators, such as electromechanical actuators. Extension of the extension legs 36 is preferably controlled by the control module 5 controlling operation of the actuators. Extension of extension legs 36 may be controlled individually or in unison.

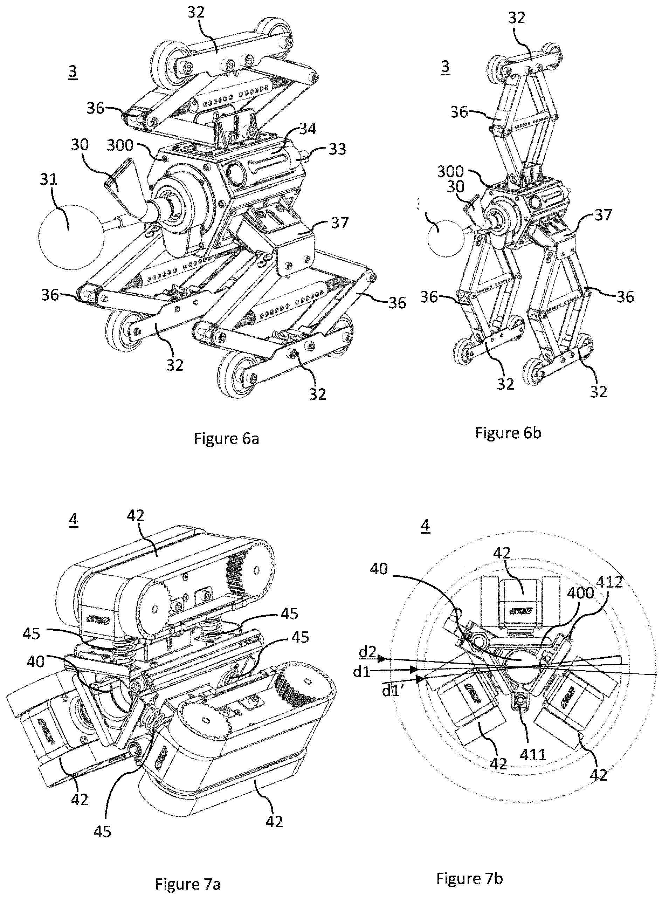

Figures 6a and 6b illustrate a further roller unit 32 adjustment option. This option is applicable to the roller units 32 with or without extension legs 36. Instead of extending the roller units 32 radially, as shown in the figures 2a to 5b, roller units 32 may be configured to extend in some other direction. This enables configuring the nozzle module 3 for example to operate in rectangular conduits. The same principle of adjusting extension direction of the roller units 32 can be applied to any shape of conduit. In the example shown in the figures 6a and 6b, one roller unit 32 is extended in a first direction, while two roller units 32 are extended a direction that is opposite to the first direction. In this example, extension direction of roller unit's 32 extension legs 36 is determined by mounting brackets 37 attached to the body 300, and the extension legs 36 are installed on these mounting brackets 37. Alternatively, roller units 32 may be installed directly on such mounting brackets 37. Different mounting brackets 37 may be designed to enable configuring the nozzle module 3 for different size and/or shape conduits. According to some embodiments, extension direction of the roller units 32 with or without extension legs 36 may be controlled by electrically controllable actuators such that extension direction can be adjusted during operation. Like any other actuators in the modular robot, also actuators controlling extension direction of roller units 32 are preferably controlled by the control module 7.

Figures 7a to 9 illustrate a drive module 4. The modular robot 10 may have one or more drive modules 4. One drive module 4 can handle only a limited amount of load. When load increases, for example when length of the conduit 1 increases and thus also length of the hose 6 needed to serve the entire length of the conduit 1 increases, more than one drive module 4 may be attached to the hose 6 at non-zero distances between each other to increase drive power. Drive modules 4 should be placed between the supply module 5 and the nozzle module 3. To maintain agility of the modular robot, all in-conduit modules should have a non-zero distance to its adjacent modules.

The drive module 4 is provided with at least three crawler units 42. In the shown embodiment, the drive module 4 is provided with three crawler units 42 extending radially from the body 400 and each crawler unit 42 configured to be operated by a respective drive motor. Drive motors may be stepper motors, each controlled by a stepper motor controller provided at the drive module 4. Drive motors are controlled by the control module 7 by means of a communication connection provided between the control module 7 and respective drive motor controller. The communication connection can be of any applicable type. Communication connection between the control module 7 and controllers may be wireless, such as a Wi-Fi connection, or it may be a wired connection implementing one or more Input/Output (I/O) ports. Preferably, there is a dedicated I/O connection between each drive motor controller and the control module.

The drive module 4 is preferably designed such that the hose 6 travels through the body 400 of the drive module 4 along the longitudinal central axis thereof. A through hole 40 traveling in intended traveling direction of the hose is provided at the central axis of the body 400 for removably attaching the drive module 4 to the hose 6. Preferably, the hose 6 is held attached to the body 400 by a friction connection facilitated by contact pressure of the inner surface of the through hole 40 on the hose 6. A hinge 411 and a latch mechanism 412 enable opening the body 400 of the drive module 4 for inserting the hose in the hole 40.

Figure 7a is a perspective view of the drive module 4. Figure 7b illustrates a distal view of the corresponding drive module 4 in a conduit with diameter d1', in other as seen from the front of the nozzle module 3. A circular conduit 1 is approximated in the figure 7b. Figures 7a and 7b illustrate the minimum diameter state of the drive module 4, in which crawler units 42 are as close to the body 400 as possible.

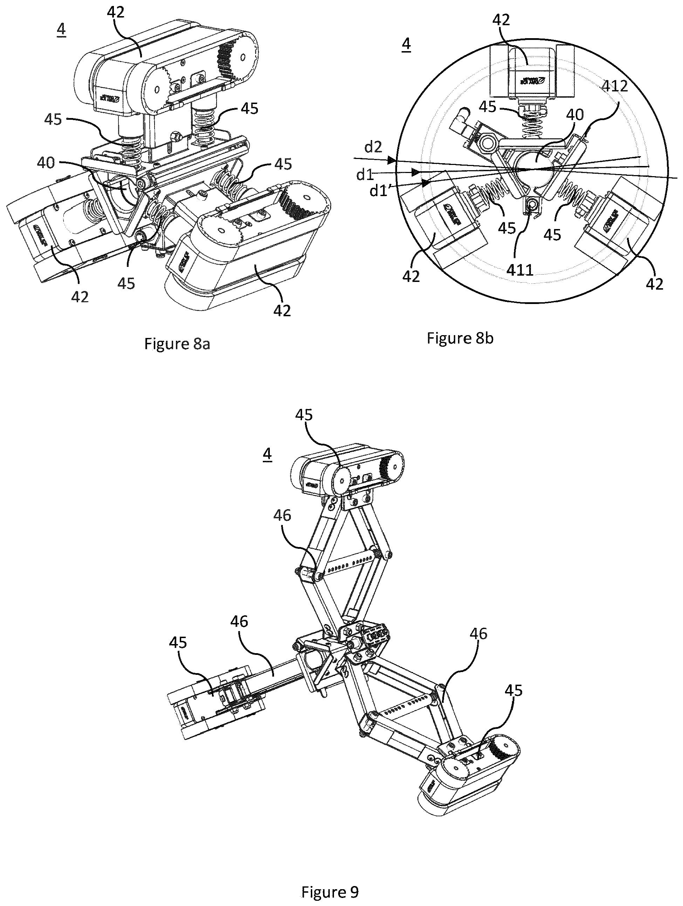

Figure 8a is a perspective view of the drive module 4. Figure 8b illustrates a distal view of the corresponding drive module 4 in a conduit with diameter d2, in other as seen from the front of the drive module 4, diameter d2 being greater than diameter d1'. A circular conduit 1 is approximated in the figure 7b. Figures 7a and 7b illustrate an increased diameter state of the drive module 4, in which crawler units 42 are pushed radially out from the body 400 by spring elements 45 provided for each crawler unit 42. Adjusting the diameter of the drive module 4 between the minimum diameter state of figures 7a and 7b and increased diameter state of figures 8a and 8b can be autonomous such that it does not require any dedicated electromechanical or other controllable actuators, since spring elements 45 may be configured to automatically push crawler units 42 radially outwards towards the inner walls of the conduit.

Figure 9 illustrates the drive module 4 provided with scissor-type extension legs 46, that enable increasing the maximum diameter of the drive module 4 to fit conduits with greater diameters. Figure 9 shows extension legs 46 in a greatly extended state, when the drive module 4 is in a conduit 1 diameter greater than d2. Extension of extension legs 46 is preferably implemented with one or more controllable actuators, such as electromechanical actuators. Extension of the extension legs 46 is preferably controlled by the control module 5 controlling operation of the actuators. Communication connection between the control module 7 and controllers may be wireless, such as a Wi-Fi connection, or it may be a wired connection implementing an Input/Output (I/O) port. Like in the nozzle module, also extension of extension legs 46 of the drive module 4 may be controlled individually or in unison. Likewise, instead of extending crawler units 42 radially as shown in figures 7a to 9, mounting brackets may be provided as discussed in connection with the nozzle module such that crawler units 42 are extended in some other direction to enable using the drive module 4 in variable shapes of conduits.

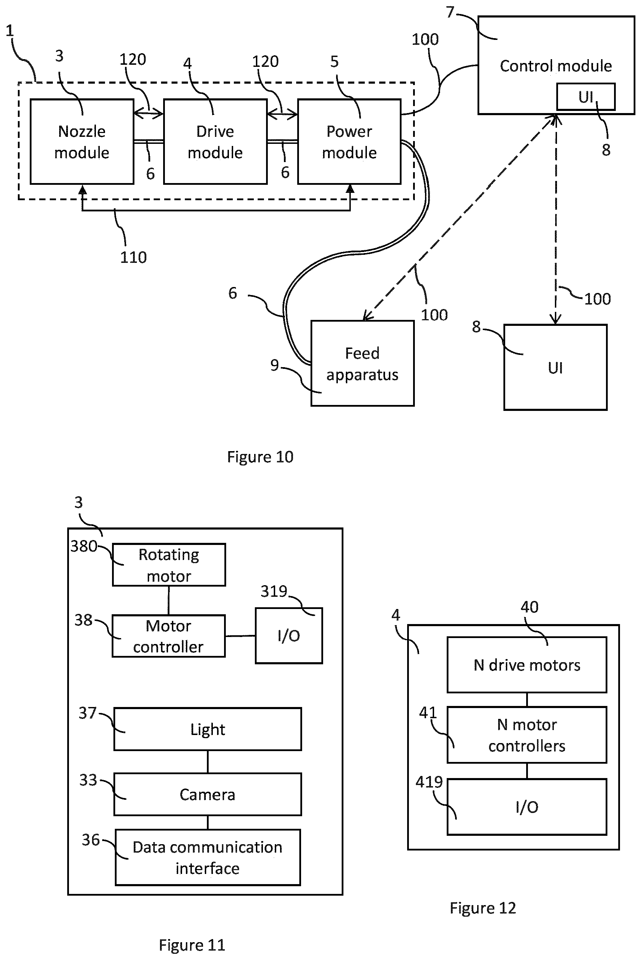

Figure 10 illustrates a conduit maintenance system according to some embodiments, the conduit maintenance system comprising the modular robot. In-conduit modules 3, 4, 5 are configured to be operating inside the conduit 1. The control module 7 is in communication with the power module 5. The control module 7 may comprise a user interface 8, and/or the control module 7 may be in communication with a separate apparatus providing user interface 8. For example, the control module 7 may be provided with wireless communications 100, such as Wi-Fi or Bluetooth, towards a mobile computing device that provides the user interface 8. At least some functions of the user interface 8 may be implemented as an application running in the mobile computing device.

In-conduit modules 3, 4, 5 are mechanically coupled with each other by the hose 6. There is a non-zero distance between the in-conduit modules to enable the portion of the modular robot 10 inside the conduit to bend for passing corners in the conduit. When the modular robot is used for cleaning, coating or grinding, the proximal end of the hose 6 is fed by a feed apparatus 9. The feed apparatus 9 produces required pressure for spraying and/or blasting substances. Alternatively, the feed apparatus 9 produces the suction for sucking substances from the conduit 1 by the nozzle. Operation of the feed apparatus 9 may be controlled by the control module 7 as determined via the user interface 8.

Control signals are provided from the power module 5 to the drive module(s) 4 and the nozzle module 3 over a control signal connection 120. In this example control signal connection 120 to the nozzle module 3 travels via the drive module(s) 4. Control signal connection 120 may be wired or wireless. Since control signals needed for exemplary stepper motor controllers are quite simple, control signal connection 120 may be implemented with simple wired I/O connections.

When the camera in the nozzle module 3 is used, the nozzle module 3 is preferably coupled to the power module 5 by a data communication connection 110. As illustrated in the figure 10, the data communication connection 110 may be implemented as a direct connection 110 between the camera and the power module 5, or via the one or more drive modules 4. According to some embodiments, there is an Ethernet connection between the camera in the nozzle module and the power module 5.

Figure 11 illustrates main functional elements of the nozzle module 3. For rotating the nozzle and/or the brush, at least one rotating motor 380 is provided with a motor controller 38, such as a stepper motor controller. Control signals are provided over the control signal connection from the control module 5 to the motor controller 38 via a control signal interface 319. The nozzle module 3 may be provided with a camera unit 33, comprising a camera such as a video camera, still camera, 3D camera, X-ray camera or infrared camera, and a light source 37. For implementing camera control as well as for enabling real-time data to be sent from the camera, a data communication interface is provided. The data communication interface may be a wired data communication interface using any known communication protocol, such as an Ethernet. The data communication interface may be a wireless data communication interface, such as Bluetooth or Wi-Fi.

When the nozzle module 3 comprises extension legs or roller units with actuators for adjusting extension thereof, or remotely controllable brackets for adjusting extension direction of roller units, the nozzle module 3 may be provided with further controllers configured to control operation of actuators and/or control signal connections for controlling operation of actuators.

Figure 12 illustrates main functional elements of the drive module 4. The drive module comprises preferably N drive motors 40, one for each crawler unit, and N motor controllers 41, such as stepper motor controllers for controlling operation of the N drive motors 40. A control signal interface 419 is preferably provided both in distal and proximal directions.

Control signal interfaces are provided for receiving control signals for each motor controller, and further control signal interfaces are provided for forwarding control signals towards the nozzle module 3.

When the drive module 4 comprises extension legs or crawler units with actuators for adjusting extension thereof, or remotely controllable brackets for adjusting extension direction of crawler units, the drive module 4 may be provided with further controllers configured to control operation of actuators and/or control signal interfaces for receiving control signals to control operation of actuators.

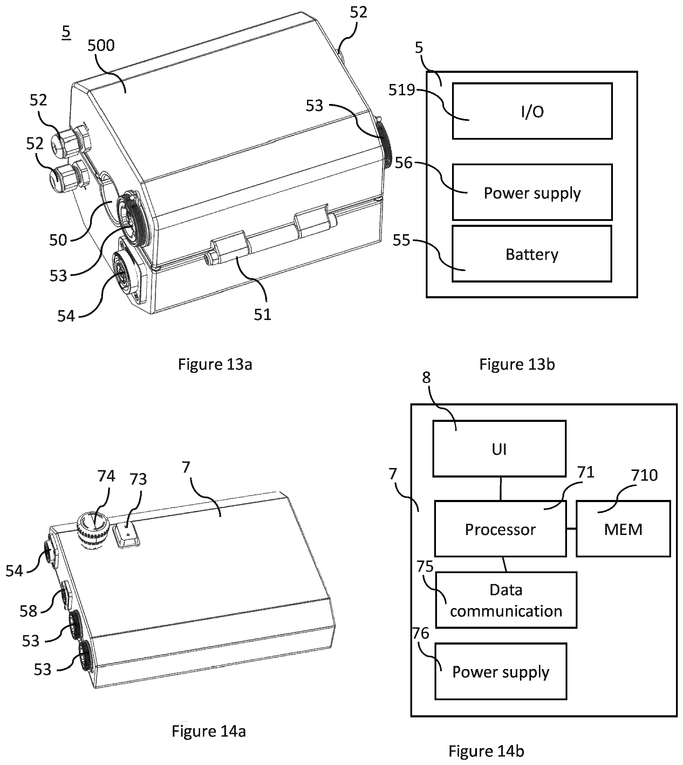

Figure 13a illustrates an exemplary power module 5. Figure 13b illustrates main functional elements of the power module 5. A through hole 50 traveling in intended traveling direction of the hose is provided at the central axis of the body 500 for removably attaching the power module 5 to the hose 6. Like in the drive module, the hose 6 is held attached to the body 500 by a friction connection facilitated by contact pressure of inner surface of the through hole 50 on the hose 6 traveling through it. In this example, the power module 5 comprises a hinge 51 and a latch mechanism (not shown) that enables opening the body 500 of the power module 5 for facilitating assembling of the hose in the through hole 50.

Figure 13a shows connectors of the power module 5. A mains power connector 54 and DC connectors 52 are provided for the power supply 56 and Ethernet connectors 53 for I/O purposes.

One or more communication interfaces 519 are provided in the power module 5 for handling various data communications and control signals to and from other modules.

A power supply 56 and/or one or more batteries 55 is also provided in the power module 5. If mains power is received by the power module 5, the power supply converts AC power received into a DC power suitable for electronics and actuators of the nozzle module 3 and the one or more drive modules 4. In some embodiments, the power module 5 receives 230V AC mains power and converts this into a 12 V DC voltage. The power supply may be for example a switched mode power supply (SMPS).

The power module 5 is provided with communication interfaces 519, comprising at least one data communication interface and one or more control signal interfaces. For supporting camera operation in the nozzle module, the power module preferably has two data communication connections, one towards the control module and another one towards the camera in the nozzle module. For example, these data communication connections may be Ethernet connections. Control signal connections may comprise wired connections implementing one or more Input/Output (I/O) ports. According to some embodiments, the power module 5 receives a single wired data communication connection from the control module 7 and includes controllers and interface circuitry for producing I/O ports towards the drive module 4 and the nozzle module 3 based on signals received over the data communication connection.

Figure 14a illustrates an exemplary control module 7, with a limited user interface. Figure 14b illustrates main functional elements of the control module 7.

The limited user interface 8 included in this exemplary control module 7 comprises an on/off button, also referred to as a power switch 73 and an emergency stop switch 74.

The control module 7 preferably comprises its own power supply 76, such as an SMPS, which is connected to mains power and provides suitable DC power. Figure 14a shows an exemplary implementation of a control module with a mains connector 54, two Ethernet connectors 53 and a further digital interface 58 as an option to implement wireline data communications with the feed apparatus 9. This digital interface 58 is preferably galvanically isolated. According to some embodiments, wireline data communication to the feed apparatus 9 is one-way, in which case the digital interface 58 is a digital output. Alternatively, data communication with the feed apparatus 9 can be implemented using wireless communications, such as Wi-Fi.

According to some embodiments, the power supply 76 of the control module 7 further provides operation power to the in-conduit modules so that no dedicated in-conduit power module is needed. In such case, the control module 7 is further provided with connectors for feeding power to the in-conduit modules.

The control module 7 comprises at least one processor 71 operatively connected to at least one memory 710 comprising executable code that enables the control module to perform its controlling functions.

The control module 7 is further provided with one or more data communication devices 75 that enable at least one data communication connection 100. If Ethernet is used in data communication towards the power module 5, data communication devices 75 comprise an Ethernet router. Figure 14a shows a control module 7 having two Ethernet connectors 53 for providing data communication over Ethernet. One Ethernet connector 53 is for interfacing the power module 5 and the other may be used for interfacing the camera unit 33. If the user interface 8 is provided by a mobile computing device, such as a mobile phone or a tablet computer or equivalent, a data communication connection 100 is provided between the control module 7 and the mobile computing device preferably wirelessly, for example over a Wi-Fi connection. In such case, a Wi-Fi router is provided in the control module 7 for handling data communication between the control module 7 and the mobile computing device.

The control module 7 may further be configured to control a feed apparatus 9. A data communication connection 100 may be used for controlling the feed apparatus.

According to some embodiments, the modular robot 10 is a grease duct robot. In such case, the substance to be blasted by the nozzle 30 is dry ice, and the feed apparatus 9 is a dry ice apparatus that feeds dry ice into the tube 6 with pressure for blasting dry ice on the inner surface of the conduit via the nozzle 30. A brush may be provided in the nozzle module 3 for facilitating efficient removal of dirt.

It is apparent to a person skilled in the art that as technology advanced, the basic idea of the invention can be implemented in various ways. The invention and its embodiments are therefore not restricted to the above examples, but they may vary within the scope of the claims.

## Claims

1. A modular robot (10) for inspecting and maintenance of conduits (1), the modular robot comprising:
- a control module (7) configured to operate outside a conduit (1), wherein the control module (7) is configured to control operation of a plurality of in-conduit modules (3, 4, 5) configured to travel, during operation, within the conduit (1), and wherein the control module is optionally configured to feed operating power to the plurality of in-conduit modules (3, 4),
wherein said in-conduit modules comprise:
- a nozzle module (3) configured to rotate a nozzle (30) and/or a brush within the conduit (1), and
- at least one drive module (4) configured to cause movement of in-conduit modules within the conduit (1), and
- optionally a power module (5) configured to feed operating power to the nozzle module (3) and the at least one drive module (4), wherein the power module (5) is configured to be in data communication with the control module and to produce control signals for the nozzle module and the at least one drive module on basis of said data communication,
wherein said in-conduit modules (3, 4, 5) are coupled to a flexible hose (6) with non-zero distances from each other, wherein the flexible hose (6) is further configured for feeding at least one substance to and/or from the nozzle module (3),
**characterized in that** the at least one drive module (4) comprises a hinge and a latch mechanism for enabling assembly of the at least one drive module (4) on the hose (6).

2. The modular robot according to claim 1, wherein the nozzle module (3) comprises a guiding member (31) protruding at the distal end of the nozzle module (3) along the longitudinal central axis of a body (300) of the nozzle module (3).

3. The modular robot (10) according to claim 2, wherein the guiding member (31) is connected directly or indirectly to the body (300) of the nozzle module (3) by a flexible member (310), such as a spring.

4. The modular robot (10) according to any preceding claim, wherein the nozzle module (3) further comprises a camera (33) and a lighting device (37), and wherein the camera (33) is provided with a data communication connection with the power module (5).

5. The modular robot (10) according to any preceding claim, wherein the power module (5) is an in-conduit-module comprising a hinge and a latch mechanism for enabling assembly of the power module (5) on the hose (6).

6. The modular robot (10) according to any preceding claim, wherein the control module (7) comprises a user interface and/or the control module is in data communication connection with a mobile computing device providing a user interface for controlling operation of the modular robot.

7. The modular robot (10) according to any preceding claim, wherein the nozzle module (3) comprises a rotating motor (380) and a motor controller (38), wherein the rotating motor (380) is configured to rotate the nozzle (30) and/or the brush based on a control signal received from the power module (5) or from the control module (7).

8. The modular robot (10) according to claim 7, wherein rotation speed of the nozzle (30) and/or the brush is adjustable within a range from 5 to 100 rotations per minute.

9. The modular robot (10) according to any preceding claim, wherein the nozzle module (3) comprises at least three roller units (32) extending outwardly from a body (300) of the nozzle module (3).

10. The modular robot (10) according to claim 9, wherein extension of roller units (32) from the body (300) of the nozzle module (3) is autonomously adjusted within a first range of extension by spring elements (35) between roller units (32) and the body (300) of the nozzle module (3).

11. The modular robot (10) according to any one preceding claim, wherein the nozzle module (3) comprises at least one crawler unit or driving wheel unit, wherein each crawler unit or driving wheel unit comprises a crawler or driving wheel, a motor and a motor controller.

12. The modular robot (10) according to any preceding claim, wherein the at least one drive module (4) comprises at least three crawler units (42) extending outwardly from a body (400) of the drive module (4), wherein each crawler unit (42) comprises a crawler, a motor (40) and a motor controller (41).

13. The modular robot (10) according to claim 12, wherein extension of crawler units (42) from the body (400) of the drive module (4) is autonomously adjusted within the first range of extension by spring elements (45) between crawler units (42) and the body (400) of the drive module (4).

14. The modular robot (10) according to any of claims 9 to 13, wherein scissor-type extension legs (36, 46) are provided for each of the roller units (32) and/or the crawler units (42), wherein extension of the scissor-type extension legs (36, 46) is configured to be controlled by electromechanical actuators on basis of control signals received from the power module (5) or the control module (7).

15. A conduit maintenance system comprising a modular robot (10) according to any of claims 1 to 14 and a feed apparatus (9) coupled to the proximal end of the hose (6), wherein the feed apparatus is in data communication connection with the control module (7) and operation of the feed apparatus (9) is configured to be controlled by the control module (7).

16. The conduit maintenance system according to claim 15, wherein the feed apparatus (9) is a dry ice apparatus.

## Patentansprüche

1. Modularer Roboter (10) zur Inspektion und Instandhaltung von Kanälen (1), wobei der modulare Roboter umfasst:
- ein Steuerungsmodul (7), das für den Betrieb außerhalb eines Kanals (1) ausgelegt ist, wobei das Steuerungsmodul (7) dazu ausgelegt ist, den Betrieb einer Mehrzahl von Kanalbefahrungsmodulen (3, 4, 5) zu steuern, die dazu ausgelegt sind, sich während des Betriebs im Kanal (1) fortzubewegen, und wobei das Steuerungsmodul optional dazu ausgelegt ist, die mehreren Kanalbefahrungsmodule (3, 4) mit Betriebsleistung zu versorgen,
wobei die Kanalbefahrungsmodule umfassen:
- ein Düsenmodul (3), das dazu ausgelegt ist, eine Düse (30) und/oder eine Bürste im Kanal (1) zu drehen, und
- mindestens ein Antriebsmodul (4), das dazu ausgelegt ist, die Bewegung der Kanalbefahrungsmodule im Kanal (1) zu bewirken, und
- optional ein Leistungsmodul (5), das dazu ausgelegt ist, das Düsenmodul (3) und das mindestens eine Antriebsmodul (4) mit Betriebsleistung zu versorgen, wobei das Leistungsmodul (5) dazu ausgelegt ist, mit dem Steuerungsmodul in Datenkommunikation zu stehen und Steuersignale für das Düsenmodul und das mindestens eine Antriebsmodul auf Grundlage der Datenkommunikation zu erzeugen,
wobei die Kanalbefahrungsmodule (3, 4, 5) mit einem flexiblen Schlauch (6) mit gegenseitigen Abständen von ungleich null gekoppelt sind, wobei der flexible Schlauch (6) ferner dazu ausgelegt ist, mindestens eine Substanz hin zum und/oder weg vom Düsenmodul (3) zu führen,
**gekennzeichnet dadurch, dass** das mindestens eine Antriebsmodul (4) ein Scharnier und einen Verschlussmechanismus umfasst, um die Montage des mindestens einen Antriebsmoduls (4) am Schlauch (6) zu ermöglichen.

2. Modularer Roboter nach Anspruch 1, wobei das Düsenmodul (3) ein Führungselement (31) umfasst, das am fernen Ende des Düsenmoduls (3) entlang der mittigen Längsachse eines Körpers (300) des Düsenmoduls (3) vorspringt.

3. Modularer Roboter (10) nach Anspruch 2, wobei das Führungselement (31) direkt oder indirekt über ein flexibles Element (310), wie eine Feder, mit dem Körper (300) des Düsenmoduls (3) verbunden ist.

4. Modularer Roboter (10) nach einem vorhergehenden Anspruch, wobei das Düsenmodul (3) ferner eine Kamera (33) und eine Beleuchtungsvorrichtung (37) umfasst, und wobei die Kamera (33) mit einer Datenkommunikationsverbindung zum Leistungsmodul (5) versehen ist.

5. Modularer Roboter (10) nach einem vorhergehenden Anspruch, wobei das Leistungsmodul (5) ein Kanalbefahrungsmodul ist, das ein Scharnier und einen Verschlussmechanismus umfasst, um die Montage des Leistungsmoduls (5) am Schlauch (6) zu ermöglichen.

6. Modularer Roboter (10) nach einem vorhergehenden Anspruch, wobei das Steuerungsmodul (7) eine Benutzerschnittstelle umfasst und/oder das Steuerungsmodul in Datenkommunikationsverbindung mit einer mobilen Rechenvorrichtung steht, die eine Benutzerschnittstelle zur Steuerung des Betriebs des modularen Roboters bereitstellt.

7. Modularer Roboter (10) nach einem vorhergehenden Anspruch, wobei das Düsenmodul (3) einen rotierenden Motor (380) und ein Motorsteuergerät (38) umfasst, wobei der rotierende Motor (380) dazu ausgelegt ist, die Düse (30) und/oder die Bürste basierend auf einem aus dem Leistungsmodul (5) oder aus dem Steuerungsmodul (7) empfangenen Steuersignal zu drehen.

8. Modularer Roboter (10) nach Anspruch 7, wobei die Rotationsgeschwindigkeit der Düse (30) und/oder der Bürste in einem Bereich von 5 bis 100 Umdrehungen pro Minute verstellbar ist.

9. Modularer Roboter (10) nach einem vorhergehenden Anspruch, wobei das Düsenmodul (3) mindestens drei Rolleneinheiten (32) umfasst, die aus einem Körper (300) des Düsenmoduls (3) nach außen überstehen.

10. Modularer Roboter (10) nach Anspruch 9, wobei der Überstand der Rolleneinheiten (32) aus dem Körper (300) des Düsenmoduls (3) durch Federelemente (35) zwischen den Rolleneinheiten (32) und dem Körper (300) des Düsenmoduls (3) innerhalb eines ersten Ausfahrbereichs selbsttätig verstellt wird.

11. Modularer Roboter (10) nach einem vorhergehenden Anspruch, wobei das Düsenmodul (3) mindestens eine Raupeneinheit oder Antriebsradeinheit umfasst, wobei jede Raupeneinheit oder Antriebsradeinheit eine Raupe oder ein Antriebsrad, einen Motor und ein Motorsteuergerät umfasst.

12. Modularer Roboter (10) nach einem vorhergehenden Anspruch, wobei das mindestens eine Antriebsmodul (4) mindestens drei Raupeneinheiten (42) umfasst, die ausgehend von einem Körper (400) des Antriebsmoduls (4) nach außen überstehen, wobei jede Raupeneinheit (42) eine Raupe, einen Motor (40) und ein Motorsteuergerät (41) umfasst.

13. Modularer Roboter (10) nach Anspruch 12, wobei der Überstand der Raupeneinheiten (42) aus dem Körper (400) des Antriebsmoduls (4) durch Federelemente (45) zwischen den Raupeneinheiten (42) und dem Körper (400) des Antriebsmoduls (4) innerhalb des ersten Ausfahrbereichs selbsttätig verstellt wird.

14. Modularer Roboter (10) nach einem der Ansprüche 9 bis 13, wobei für jede der Rolleneinheiten (32) und/oder Raupeneinheiten (42) scherenartige Ausfahrbeine (36, 46) vorgesehen sind, wobei das Ausfahren der scherenartigen Ausfahrbeine (36, 46) so ausgelegt ist, dass es durch elektromechanische Aktoren basierend auf Steuersignalen, die aus dem Leistungsmodul (5) oder dem Steuerungsmodul (7) empfangen werden, gesteuert wird.

15. Kanalinstandhaltungssystem, das einen modularen Roboter (10) nach einem der Ansprüche 1 bis 14 und eine mit dem nahen Ende des Schlauches (6) gekoppelte Versorgungseinrichtung (9) umfasst, wobei die Versorgungseinrichtung in Datenkommunikationsverbindung mit dem Steuerungsmodul (7) steht und der Betrieb der Versorgungseinrichtung (9) dazu ausgelegt ist, durch das Steuerungsmodul (7) gesteuert zu werden.

16. Kanalinstandhaltungssystem nach Anspruch 15, wobei die Versorgungseinrichtung (9) eine Trockeneiseinrichtung ist.

## Revendications

1. Robot modulaire (10) pour l'inspection et la maintenance de canalisations (1), ledit robot modulaire comprenant :
- un module de commande (7) configuré pour fonctionner à l'extérieur d'une canalisation (1), ledit module de commande (7) étant configuré pour commander le fonctionnement d'une pluralité de modules internes (3, 4, 5) configurés pour se déplacer à l'intérieur de la canalisation (1) pendant le fonctionnement, et ledit module de commande étant optionnellement configuré pour fournir de la puissance de fonctionnement à la pluralité de modules internes (3, 4),
lesdits modules internes comprenant :
- un module de buse (3) configuré pour faire tourner une buse (30) et/ou une brosse à l'intérieur de la canalisation (1), et
- au moins un module d'entraînement (4) configuré pour causer le déplacement des modules internes à l'intérieur de la canalisation (1), et
- en option, un module de puissance (5) configuré pour fournir de la puissance de fonctionnement au module de buse (3) et audit au moins un module d'entraînement (4), ledit module de puissance (5) étant configuré pour être en communication de données avec le module de commande et pour produire des signaux de commande pour le module de buse et ledit au moins un module d'entraînement sur la base de ladite communication de données,
dans lequel lesdits modules internes (3, 4, 5) sont couplés à un tuyau flexible (6) avec des distances non zéro entre eux, ledit tuyau flexible (6) étant également configuré pour amener et/ou évacuer au moins une substance au/du module de buse (3),
**caractérisé en ce que** ledit au moins un module d'entraînement (4) comprend une charnière et un mécanisme de verrouillage pour autoriser le montage dudit au moins un module d'entraînement (4) au tuyau (6).

2. Robot modulaire selon la revendication 1, dans lequel le module de buse (3) comprend un membre de guidage (31) faisant saillie à l'extrémité distale du module de buse (3) le long de l'axe central longitudinal d'un corps (300) du module de buse (3).

3. Robot modulaire (10) selon la revendication 2, dans lequel le membre de guidage (31) est relié au corps (300) du module de buse (3) directement ou indirectement par le biais d'un élément flexible (310) tel qu'un ressort.

4. Robot modulaire (10) selon une revendication précédente quelconque, dans lequel le module de buse (3) comprend également une caméra (33) et un dispositif d'éclairage (37), et dans lequel la caméra (33) est pourvue d'un lien de communication de données avec le module de puissance (5).

5. Robot modulaire (10) selon une revendication précédente quelconque, dans lequel le module de puissance (5) est un module interne comprenant une charnière et un mécanisme de verrouillage pour autoriser le montage du module de puissance (5) au tuyau (6).

6. Robot modulaire (10) selon une revendication précédente quelconque, dans lequel le module de commande (7) comprend une interface d'utilisateur et/ou le module de commande est en liaison de communication de données avec un dispositif informatique mobile qui fournit une interface d'utilisateur pour commander le fonctionnement du robot modulaire.

7. Robot modulaire (10) selon une revendication précédente quelconque, dans lequel le module de buse (3) comprend un moteur de rotation (380) et un contrôleur de moteur (38), ledit moteur de rotation (380) étant configuré pour faire tourner la buse (30) et/ou la brosse sur la base d'un signal de commande reçu en provenance du module de puissance (5) ou du module de commande (7).

8. Robot modulaire (10) selon la revendication 7, dans lequel la vitesse de rotation de la buse (30) et/ou de la brosse est réglable dans une plage de 5 à 100 tours par minute.

9. Robot modulaire (10) selon une revendication précédente quelconque, dans lequel le module de buse (3) comprend au moins trois unités de roulette (32) dépassant du corps (300) du module de buse (3) vers l'extérieur.

10. Robot modulaire (10) selon la revendication 9, dans lequel le dépassement des unités de roulette (32) par rapport au corps (300) du module de buse (3) est ajusté de manière autonome dans une première plage d'extension par des éléments-ressorts (35) entre les unités de roulette (32) et le corps (300) du module de buse (3).

11. Robot modulaire (10) selon une revendication précédente quelconque, dans lequel le module de buse (3) comprend au moins une unité de chenille ou unité de roue motrice, chaque unité de chenille ou unité de roue motrice comprend une chenille ou une roue motrice, un moteur et un contrôleur de moteur.

12. Robot modulaire (10) selon une revendication précédente quelconque, dans lequel ledit au moins un module d'entraînement (4) comprend au moins trois unités de chenille (42) dépassant d'un corps (400) du module d'entraînement (4) vers l'extérieur, chaque unité de chenille (42) comprenant une chenille, un moteur (40) et un contrôleur de moteur (41).

13. Robot modulaire (10) selon la revendication 12, dans lequel le dépassement des unités de chenille (42) par rapport au corps (400) du module d'entraînement (4) est ajusté de manière autonome dans la première plage d'extension par des éléments-ressorts (45) entre les unités de chenille (42) et le corps (400) du module d'entraînement (4).

14. Robot modulaire (10) selon l'une des revendications 9 à 13, dans lequel des pieds extensibles de type ciseaux (36, 46) sont prévus pour chacune des unités de roulette (32) et/ou des unités de chenille (42), l'extension desdits pieds extensibles de type ciseaux (36, 46) étant configurée pour être commandée par des actionneurs électromécaniques sur la base de signaux de commande reçus en provenance du module de puissance (5) ou du module de commande (7).

15. Système de maintenance de canalisation comprenant un robot modulaire (10) selon l'une des revendications 1 à 14 et un dispositif d'alimentation (9) couplé à l'extrémité proximale du tuyau (6), dans lequel le dispositif d'alimentation est en liaison de communication de données avec le module de commande (7) et le fonctionnement du module d'alimentation (9) est configuré pour être commandé par le module de commande (7).

16. Système de maintenance de canalisation selon la revendication 15, dans lequel le dispositif d'alimentation (9) est un dispositif à glace carbonique.
